# EUROPEAN PATENT APPLICATION

(11) **EP 4 737 356 A1**
(43) Date of publication of application: **06.05.2026**
(21) Application number: 24209820.0
(22) Date of filing: 30.10.2024
(51) Int. Cl.: B65G 1/04, B65G 1/06

(54) **STORAGE SYSTEM WITH A MULTI-LEVEL STORAGE RACK AND METHOD OF OPERATION FOR PROVIDING TRANSPORT UNITS FROM A STORAGE FACILITY**

(71) Applicant: Dematic Pte. Ltd., Singapore 409835 (SG)
(72) Inventor: YAMASHITA, Shin, 469600 Singapore (SG); CHEUNG MEI SAI, Steve, 417101 Singapore (SG)
(74) Representative: Moser Götze & Partner Patentanwälte mbB

(57) **Abstract**

The invention relates to a storage system for transport units (T), with two different kinds of storage and removal apparatus, one of the single level service type and one of the multi level service type. Wherein a control is operable to control the storage and retrieval of transport units (T) by controlling movement of the first storage and removal apparatus (5) of the single level service type and of the removal-from-storage lift (8A) and of the supply-to-storage lift (8B) and of the second storage and removal apparatus of the multi level service type and is operable to
- use the first area of the storage racks (R) for dedicated storage of fast mover transport units (FT), which is serviced by storage and removal apparatus (5) of the single level service type present on each such level and each such level is directly connected to the at least one removal-from-storage lift (8A) and the at least one supply-to-storage lift (8B), both removal-from-storage lift (8A) and supply-to-storage lift (8B) having interfacing rack conveyors (9) arranged within the footprint of the racking;
and is operable to
- use the second area of the storage racks (R) for dedicated storage of slow mover transport units (ST), which is serviced by the second storage and removal apparatus of the multi level service type.

## Description

The invention relates to a storage system for transport units of claim 1 and a corresponding method of claim 18.

Automated storage and retrieval machines (ASRS), also referred to as stacker cranes, handle the automatic storage and retrieval of conveyance goods in automatic mini-load or unit-load warehouses and automatic pallet high-bay warehouses, regardless of whether storage is single, double or multi-deep.

These devices have a mast extending the height of the racks that travels along a travel rail(s) attached on the single side of rack and depending on a variant on the floor in the aisle between two racks and depending on height is usually also guided and supported at the top of one or both side of the racks. They have a load handling means that travels vertically along the mast for placing loads into storage bays or retrieving such. Usually, these load handling means can operate to both sides of the aisle, i.e. interface with both racks of an aisle. In some embodiments, the mast is a dual mast (ladder-type frame), which supports the load handling means or carriage at both sides of the frame.

The mast connects to the trolley for running on the rail and to the head crossbeam for guidance. Depending on the application, single or double mast versions are possible. The lifting carriage is guided along the mast. However, the mast may also contain other components such as the hoist with the rope or chain drive, the main control cabinet, platforms and access ladders with the personal protective equipment (PPE), power supply lines to the main control cabinet and to the lifting carriage via conductor lines or cable chains.

Usually, an ASRS is installed for each rack aisle. Changing the rack aisle would require a considerably more complex design and significantly increase the access times to a storage bay. Nevertheless, they are however manufactured known, as so called 'curve-going' ASRS. Pairs of ASRS are also useful for each aisle, one dedicated to each rack.

It is not only the desired operating time that determines the choice of solutions, but also payloads, building heights, storage strategies, etc.

The head crossbeam contains the upper trolley and connects the two masts if necessary. The upper trolley consists of guide rollers that are guided in a rail on the rack yoke (upper connecting structure of the rack rows). In the case of single mast units that cannot negotiate curves, the top cross beam can sometimes even be omitted.

To simplify the mast and reduce the weight of the ASRS it is known to provide a rack-guided ASRS, in which the ASRS is lightweight and is guided and runs on rails that are arranged on the face of the rack itself. Such ASRS with guides on the rack top and bottom areas are for example known from Libiao Robotic (see EP 4 286 065 A1 Figure 2; https://www.libiaorobot.com/en/solution#item1) or Blue Sword (see https://www.youtube.com/watch?v=Xh59rFxtDiw ; https://www.youtube.com/watch?v=3dc Ut2KDYA).

These systems include a lightweight double mast on which a shuttle-type load handling carriage travels, wherein the mast runs on a bottom rail and a top rail and is also guided and supported by an intermediate rail that are all supported by and connected to the rack itself.

This construction allows the rack to carry part of the loads so that the ASRS itself can be made light weight.

When picking or compiling orders from ready-picked transport units, such as articles or containers, it is necessary to provide the transport units, which are associated with a common order, in a sequenced or sorted manner. For this purpose, it is typical to temporarily store (buffer) the transport units of one order until all of the transport units required for the order are present. They are then passed collectively onto a collecting line, which guides them to the palletization area, picking station, goods issuing department, dispatch, or the like.

A high rack storage facility includes a feeding or storage-entry area, via which the goods are delivered and from which the racking serving units collect the goods for entry into storage, the so-called pre-zone. Similarly, a removal-from-storage area is required, at which after removal from storage the racking serving units place down the goods also assigned to the pre-zone. In the case of automatic picking warehouses, picking points are typically arranged in the pre-zone. The pre-zone is also where the goods are identified for the inventory management system or the material flow computer.

EP 1 964 792 B1 discloses a method for providing transport units from a storage facility in a desired sequence on at least one collecting line. Racking serving units in each storage-racking aisle, removal lifts and removal-feeding lines are controlled so as to be coordinated with one another and are loaded with goods such that they ultimately end up sorted on the collecting line or are delivered thereby. The control and coordination are therefore relatively complex and require technical outlay in the so-called pre-zone outside the actual racking.

EP 2 741 977 A1 discloses a method for providing transport units from a storage facility on at least one removal line, wherein the transport units are stored in a plurality of storage racks and storage rack levels, wherein interior storage racks are arranged in pairs adjoining one another and have a storage aisle on each side of the pair. At least one storage line and at least one removal line is provided. The transport units are placed into storage in, and removed from storage from, the storage rack via a storage and removal apparatus for each access aisle. For each access aisle, a storage and removal apparatus is provided. At least one removal lift is used to transfer the transport units to the removal line connected downstream thereof. A direct exchange of transport units takes place between two adjoining storage racks from one access aisle to an adjacent access aisle via transverse conveyance locations in the storage racks. The storage and removal apparatus moves the transport units in the transverse conveyance locations.

In such storage systems using so-called shuttles as storage and retrieval vehicles (see e. g. https://www.dematic.com/de-de/produkte/produktueberblick/lagertechnik/multishuttle/) it is possible to use the shuttles in two variants, a so-called "captive" and a so-called "roaming" arrangement. In the captive arrangement, the vehicles remain on their respective level, i. e. they are single-level-servicing-vehicles. In the roaming arrangement, the vehicles change levels according to requirement using a vehicle lift. In this variant the vehicles are multi-level-servicing-vehicles.

The captive variants have limited scalability in terms of number of shuttles vs. retrieval performance. Roaming may overcome this but goes hand in hand with the loss of performance due to decrease in number of shuttles and/or roaming lift retrieval performance restriction and also has downsides as consolidation and sequencing of retrieved items is poor.

DE 10 2009 032 406 A1 discloses a storage system in which shuttles may be moved between aisles by use of a dedicated rack servicing machine located as the back of the storage and able to carry a shuttle along the back of the storage crosswise.

DE 10 2020 205 747 A1 describes a method for storing and/or removing a storage item in or from a storage system, in particular a storage and removal system, having a rack storage with a plurality of storage racks spaced apart from one another, the storage racks having one or more storage locations for a storage item in a plurality of superimposed rack levels, and a rack aisle being formed in each case between adjacent storage racks, and a plurality of preferably bidirectional shuttles for transporting stored goods or containers for the stored goods from or to a storage location, wherein the shuttles for travelling on in the rack aisles, preferably by guide rails, in each case in a rack plane, is designed with structurally simple means with regard to flexible operation with high performance at favorable costs, that - for forming at least one captive aisle section or at least one captive shelf level - one or more shuttles is or are assigned to a single aisle section or a single shelf level in each case, and that - for forming at least one roaming area - one or more shuttles is or are assigned to a plurality of aisle sections or a plurality of shelf levels in each case.

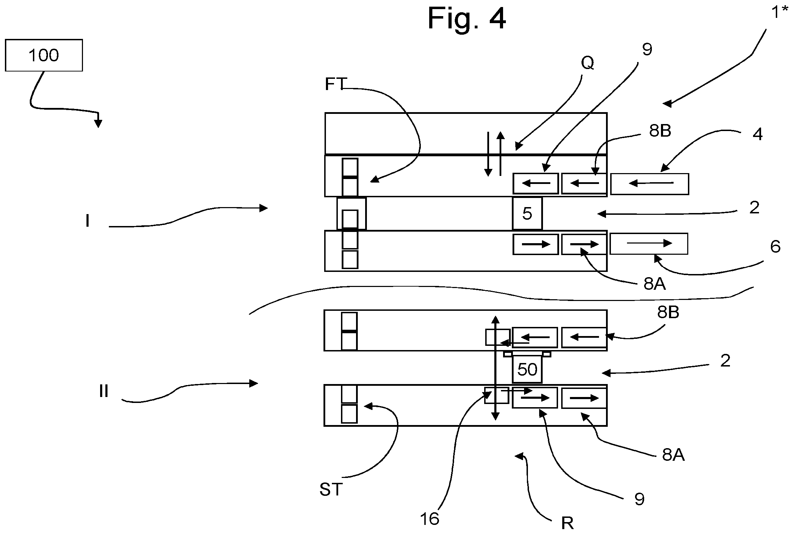

US 2014/0124462 A1 discloses a multi-tier automated warehouse including first and second stacking racks having multiple tiers of shelves and being positioned facing one another in parallel; loading shuttles which are capable of horizontal travel between the stacking racks, and which carry out loading and unloading of cargo upon the shelves; and an elevator device for moving the loading shuttles to different tiers. The elevator device further includes masts which are positioned adjacent to the stacking racks; a shuttle elevator platform, which is positioned elevatable on the inner side of the masts, for elevating the loading shuttles; and cargo elevator platforms, which are positioned elevatable on the outer side of the masts, for elevating the cargo. In a state where the shuttle elevator platform is aligned with the cargo elevator platforms, it is possible for the loading shuttles on the shuttle elevator platforms to carry out cargo loading and unloading to the cargo elevator platforms, allowing handling cargo even while the loading shuttles are being elevated, obviating the need for wasteful waiting for cargo. As a result, it is possible to implement high performance. In this context, as illustrated in FIG. 4, the multi-tier racks may be divided into upper and lower parts, the waiting platforms being provided at each tier in the lower part and no waiting platforms being provided in the upper part, or vice versa. In the embodiment illustrated in FIG. 4, the upper part will correspond to the roaming-type automated storage/retrieval system according to the first embodiment, and the lower part will correspond to the captive-type automated storage/retrieval system in which a transferring shuttle is provided at each tier. This design is intended to make part of the automated storage/retrieval system the roaming-type and slow moving loads to be stored or retrieved in this part, restraining increase of cost, and to make the remaining part thereof almost captive-type or completely captive-type and to store so-called fast moving loads to be stored or retrieved in this remaining part, thus maximizing throughput performance. Accordingly, this design is advantageous for a high-rise automated storage/retrieval system and/or an automated storage/retrieval system that stores loads whose storage and retrieval frequencies are various.

Therefore, it is an objective of the invention to provide a storage system that combines the advantages of shuttles and ASRS.

This object is achieved by the storage system of claim 1 and the method of claim 18.

By providing a storage system for transport units in which the control is operable to control the storage and retrieval of transport units by controlling movement of the first storage and removal apparatus of the single level service type and of the removal-from-storage lift and of the supply-to-storage lift and of the second storage and removal apparatus of the multi level service type and is operable to
- use the first area of the storage racks for dedicated storage of fast mover transport units, which is serviced by storage and removal apparatus of the single level service type present on each such level and each such level is directly connected to the at least one removal-from-storage lift and the at least one supply-to-storage lift, both removal-from-storage lift and supply-to-storage lift having interfacing rack conveyors arranged within the footprint of the racking;
and is operable to
- use the second area of the storage racks for dedicated storage of slow mover transport units, which is serviced by the second storage and removal apparatus of the multi level service type,

it is possible to satisfy high performance needs for the fast mover articles and provide low cost scalability for the slow mover articles. As such a compromise between the two approaches, high performance single level shuttle and slower multi level ASRS, has been achieved that provides a sweet spot especially for storage racks having many levels (i. e. high rise racks) with medium to high throughput.

In other words, and according to the invention, slow mover articles are stored in levels/aisles that are separate from levels/aisles for fast mover articles and the high performance single level storage and removal apparatus are used for servicing of the fast movers. As such the inbound and outbound lifts are arranged in the respective fast mover aisles and are preferably decoupled from the rack servicing devices by buffer conveyors. The slow movers are in turn serviced by the more cost effective but slower multi level ASRS.

The first area of the storage racks and the second area of the storage racks may be arranged vertically above each other and/or in adjacent aisles.

If the first area of the storage racks and the second area of the storage racks are arranged vertically above each other they often share but not limited to, the same rack structure, meaning that the rack scaffolding, e. g. uprights, is continuous from top to bottom.

If the first and second area are arranged vertically above each other, the storage racks may have an exchange storage rack level that has shared access to the removal-from-storage lift and to the supply-to-storage lift as well as by the second storage and removal apparatus of the multi level service type. This allows to supply and discharge transport units from the storage racks using a single point of entry/exit which simplifies interfacing with the rest of the warehouse and provide combined sequenced retrieval across those two technologies working as a single machine.

The first storage area and the second storage area may be arranged in the same aisle with the first storage area being below the second storage area.

On the other hand, the areas may be vertically separated by an intermediate floor level or mezzanine level, which allows supply and discharge of transport units to both areas.

The at least one storage-entry feeding line and at least one removal-from storage feeding line may be arranged on the floor level when the first area is arranged below the second area, or are arranged on a mezzanine level when the first area is arranged above the second area.

The exchange systems will often be arranged at the end of the racks opposite the least one removal-from-storage lift and the at least one supply-to-storage lift, and possibly coincide/align with them.

It is however also possible to arrange the removal-from-storage lifts and the supply-to-storage lifts within the racks somewhere along the aisles such that the ASRS and shuttle can pass the lifts. Usually, this will be in the middle of the aisle length. In other words, the lifts are integrated into the rack such that they share the joint foot print thereof and the aisle is not blocked. Then it is beneficial when the exchange systems are arranged in a certain level(s). Such a level(s) can be either also within the racks or beneath and/or above the racks in extra level(s). Then the storage-entry feeding line and at least one removal-from storage feeding line will be located accordingly.

Such an arrangement allows for transport units to be discharged to the lift at the same time as the lift is discharged, allowing for a high performance due to duplicate or tandem exchange.

It is also possible to add additional storage and removal apparatus of the multi level service type and/or of the single level service type to the respective areas, as the lifts are now accessible from two sides.

This also allows to move transport units containing order items either directly to an outbound removal-from-storage lift or route them to another storage area for order consolidation.

Transport units containing product items may be directly stored to the first area of the storage racks, i. e. fast moving zone, or they may be stored first in second area of the storage racks, i. e. slow mover zone, as a reserve storage and then routed to another storage area when they are needed, "activated". Other way around, transport units containing "active" products may be routed to the second storage area of the racks, i. e. slow moving storage, once they are not needed directly anymore, i. e. become "inactive".

Interfacing rack conveyors may be located adjacent the lift within the racking footprint such that they source and/or discharge the neighboring lifts to decouple their operation from that of the (single level) storage and removal apparatus.

These rack conveyors may also be controlled to be single directional or to be used in either direction (bidirectional or reversable) so that transport units containing order items may be either retrieved directly and moved to the outbound removal-from storage feeding line or routed to another storage area for order consolidation (later use). The rack conveyors in certain levels may be inbound and those on other levels outbound. Such arrangement may be alternating. The alternation may also be not only by level but also by side of the lift, if the lifts are arranged within the racks along the aisles.

The at least one storage-entry feeding line and at least one removal-from storage feeding line may be arranged on the floor or elevated level(s) when the first area is arranged below the second area, or are arranged on a mezzanine level when the first area is arranged above the second area.

The storage system may include AMR (or AGV) travelling on a floor level or mezzanine level, below the racks, and exchanging transport units with the first and/or second area and/or across other aisles for order consolidation purpose by receiving or discharging transport units form the lowest rack storage level of the respective area.

Automated guided vehicles (AGV) are transport vehicles with their own drive unit that move on defined paths. They navigate automatically on the predefined routes on the paths. In contrast to AGVs, autonomous mobile robots (AMR) move independently through their environment and with sensors that allow them to independently detect obstacles and avoid them.

The control may be operable to use the AMR travelling on a floor level or mezzanine level below the racks of the second area for exchanging slow mover transport units between aisles.

The storage racks of the first area not arranged on the outside may be each arranged in pairs adjoining one another and having a racking storage aisle on one side and exchange of transport units may take place between the center storage racking aisle and an adjacent wing storage racking aisle via transverse conveyance locations in the storage racks themselves, wherein the storage and removal apparatus of the single level service type move the transport units in the transverse conveyance locations.

Additionally, the control may be operable to use the dedicated levels and/or aisles for consolidating fast mover transport units.

The control may also be operable to use the rack space at the opposite side of the removal-from-storage lift and of the supply-to-storage lift for temporarily buffering and/or consolidating slow mover transport units.

In a further embodiment, the control is operable to use a third area of the storage racks as a hybrid storage area for slow mover transport units and fast mover transport units, which is serviced by storage and removal apparatus of the single level service type.

In a preferred embodiment, the second storage and removal apparatus of the multi level service type runs on and is guided by at least two travel rails that run longitudinally in parallel to scaffolding of one of the storage racks and facing the aisle at differing levels to service the length and height of both storage racks, in a second area of the storage racks, one travel rail located at the top of the rack, and one travel rail located on the upper half of the rack, wherein the ASRS comprises a vertical ladder-type mast with cross beams, a bifacial load handling means travelling vertically along the mast for loading and unloading items to sides of the aisle, a top trolley located in the top area of the mast for engaging the upper travel rail of the at least two travel rails and an intermediate trolley located in the upper half of the mast for engaging the intermediate travel rail of the at least two travel rails, at least one of the trolleys is driven and at least one travel rail contains a bus bar for power supply to the ASRS using the corresponding trolley.

The invention also relates to a method for control of a storage system for transport units with the storage system having a plurality of storage racks with multiple storage rack levels with an aisle in between two storage racks for storage of the transport units, the transport unit being either fast mover transport units or slow mover transport units, wherein fast mover transport units are stored in a first area of the storage racks for dedicated storage of fast mover transport units, which is serviced by storage and removal apparatus of the single level service type present on each such level and each such level is directly connected to the at least one removal-from-storage lift and the at least one supply-to-storage lift, both removal-from-storage lift and supply-to-storage lift having interfacing rack conveyors arranged within the footprint of the racking; and slow mover transport units are stored in a second area of the storage racks for dedicated storage of slow mover transport units, which is serviced by the second storage and removal apparatus of the multi level service type.

Further features and details of the invention will be apparent from the description hereinafter of the drawing, in which:
- Figure 1: shows a schematic side view of a first embodiment of the invention;
- Figure 2: shows a schematic birds view of figure 1;
- Figure 3: shows a schematic side view of a second embodiment of the invention;
- Figure 4: shows a schematic birds view of figure 3;
- Figure 5: shows a schematic side view of a third embodiment of the invention;
- Figure 6: shows a schematic birds view of figure 5;
- Figure 7: shows a schematic side view of a fourth embodiment of the invention;
- Figure 8: shows a schematic birds view of figure 7;
- Figure 9: shows a schematic side view of a fifth embodiment of the invention and
- Figure 10: shows a schematic side view of a sixth embodiment of the invention.

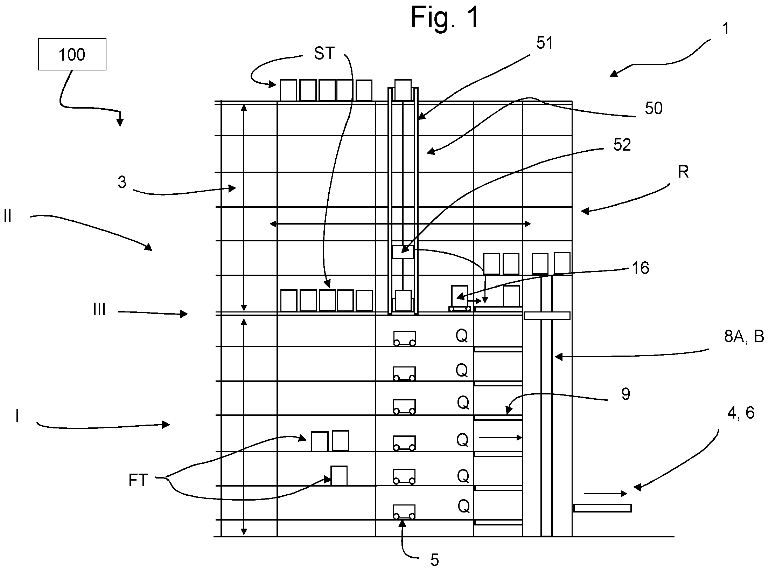

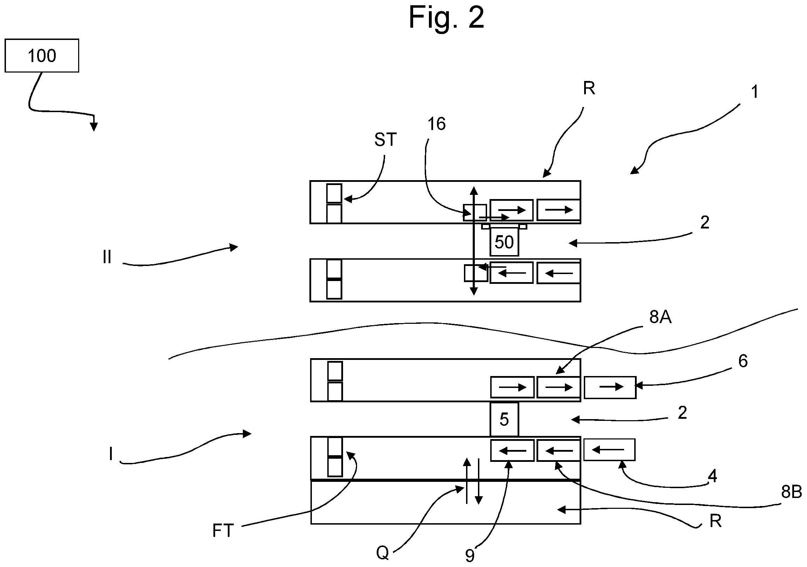

The storage system 1 for transport units T of figures 1 and 2 comprises a plurality of storage racks R with multiple storage rack levels 3 for storage of the transport units T.

The storage system 1 has a first area I of the storage racks R and a second area II of the storage racks R, wherein the first area I is arranged below the second area II. Between these areas I and II a mezzanine level III is arranged.

Several first storage and removal apparatus 5 of the single level service type travel along the aisle 2, in the first area I of the storage racks R, and have a central load carrying area for carrying transport units T with adjacent telescopic load handling means, extendable to both sides of the apparatus for storage and retrieval of the transport units T into storage and from storage and for discharging to and supplying from an at least one removal-from-storage lift 8A and an at least one supply-to-storage lift 8B.

Second storage and removal apparatus 50 of the multi level service type (ASRS) run on and are guided by several travel rails that run longitudinally in parallel to scaffolding, and are fixed to these, of one of the storage racks and face the aisle 2 at differing levels to service the length and height of both storage racks, in the second area II of the storage racks R. The ASRS 50 comprises a vertical ladder-type mast 51 with cross beams, a bifacial load handling means 52 travelling vertically along the mast for loading and unloading items to sides of the aisle 2 into the racks R.

The at least one removal-from-storage lift 8A and the at least one supply-to-storage lift 8B extend to the mezzanine level III so that the second storage and removal apparatus 50 may discharge and retrieve transport units T thereby, as the ASRS 50 can reach the mezzanine level III.

AMR 16 travel on the mezzanine level III so as to exchange transport units T between aisles 2 of the second area II therein.

In the first area I, the storage racks R not arranged on the outside of the storage are each arranged in pairs adjoining one another back-to-back and have a storage racking aisle 2 on one side and exchange of transport units T takes place between the center storage racking aisle 2 and an adjacent storage racking aisle 2' via transverse conveyance locations Q in the storage racks themselves, wherein the storage and removal apparatus 5 moves the transport units T in the transverse conveyance locations Q.

Between the rack R and the respective lifts 8A, 8B buffering rack conveyors 9 are placed, to decouple the load handling of the transport units T by the storage and removal apparatus 5 and the lifts 8A, 8B.

For connection to the rest of the warehouse at least one storage-entry feeding line 4 and at least one removal-from storage feeding line 6 are provided on the floor level of the first area I.

The at least one removal-from-storage lift 8A is used to transfer the transport units T to the removal-from-storage feeding line 6 and the at least one supply-to-storage lift 8B is used to transfer the transport units T from the at least one storage-entry feeding line 4. These are so-called captive lifts as they are used to transport units T only.

The storage system 1 also includes at least one control 100 for the control of the system and its components.

Transport units containing fast movers, so called fast mover transport units FT, are stored in the first area I, and transport units containing slow movers, so called slow mover transport units ST, are stored in the second area II.

Therefore, the control 100 is operable to control the storage and retrieval of transport units T by controlling movement of the first storage and removal apparatus 5 of the single level service type and of the removal-from-storage lifts 8A and of the supply-to-storage lifts 8B and of the second storage and removal apparatus 50 of the multi level service type and is operable to
- use the first area of the storage racks R for dedicated storage of fast mover transport units FT, which is serviced by storage and removal apparatus 5 of the single level service type present on each such level and each such level is directly connected to the at least one removal-from-storage lift 8A and the at least one supply-to-storage lift 8B, both removal-from-storage lift 8A and supply-to-storage lift 8B having interfacing rack conveyors 9 arranged within the footprint of the racking;
and is operable to
- use the second area of the storage racks R for dedicated storage of slow mover transport units ST, which is serviced by the second storage and removal apparatus 50 of the multi level service type.

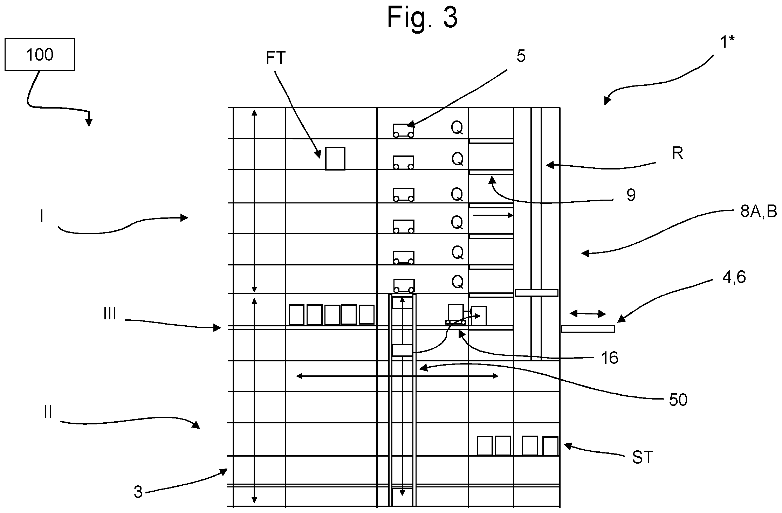

In contrast to the above, the storage system 1* of figures 3 and 4 are switched with relation to the arrangement of the first area I and second area II. The storage system 1* has a first area I of the storage racks R and a second area II of the storage racks R, wherein the first area I is arranged above the second area II. Between these areas I and II a mezzanine level III is arranged.

Essentially, all else is the same except for the at least one storage-entry feeding line 4 and at least one removal-from storage feeding line 6 are provided on the mezzanine level III.

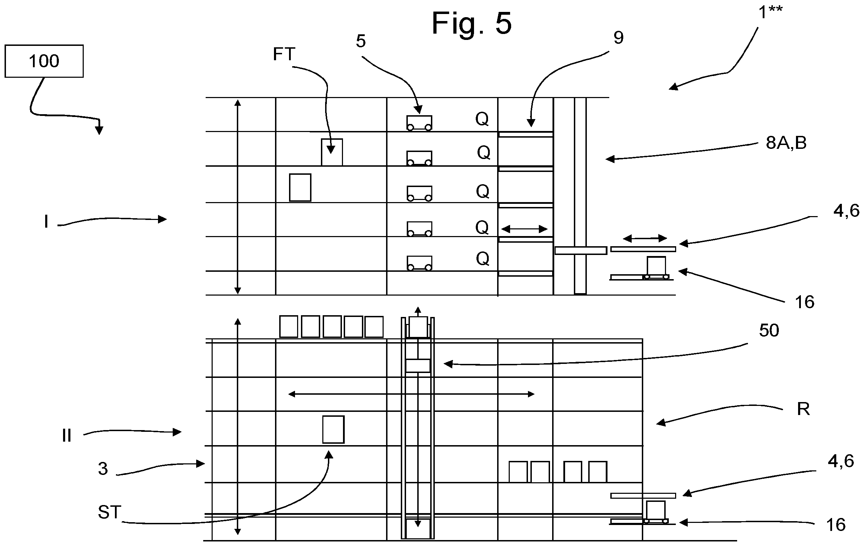

In the embodiments of figures 5 to 6 the storage systems 1** has similar arrangements as above, i.e. first area I is above second area II, but have the main difference that the first and second areas I and II are not vertically "connected". They are now arranged side by side horizontally. So, they are horizontally connected by inter aisle exchange via transverse conveyance locations Q in the storage racks themselves and also via the AMR 16 that now travel on the floor level so as to exchange transport units T between aisles 2 and areas I and II.

As such, second area II may now also have connections to inbound and outbound conveyors, storage-entry feeding lines 4 and removal-from storage feeding lines 6.

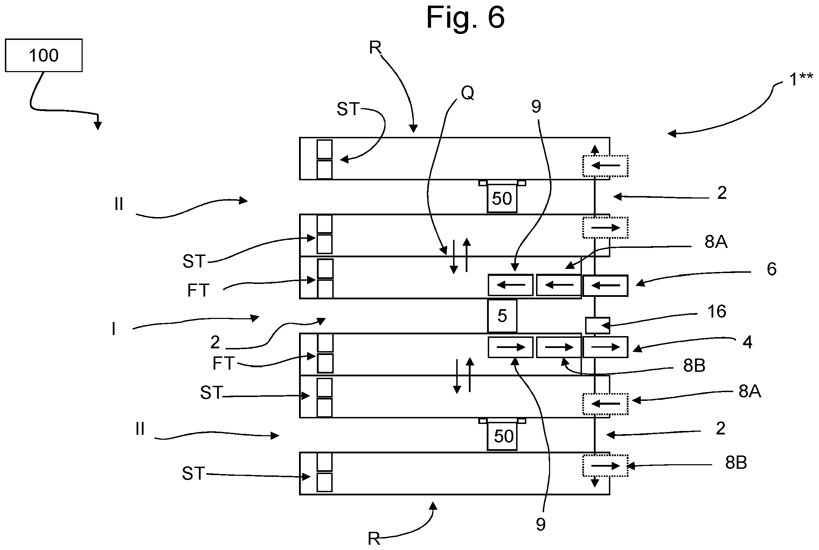

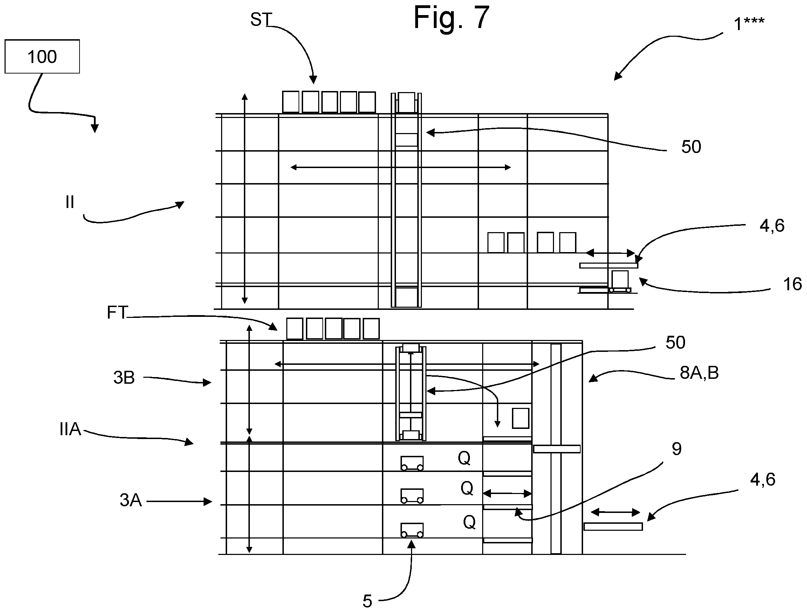

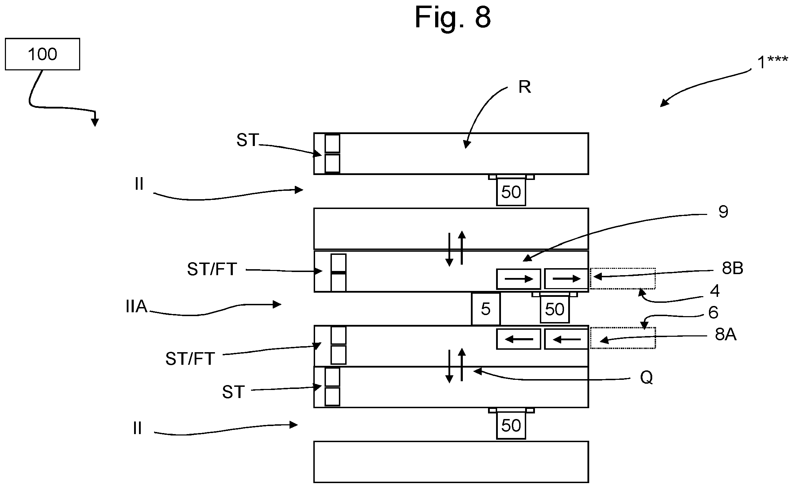

In contrast, the storage systems 1*** of figures 7 and 8 has first area I beside second area II, as in figures 5 and 6, but first area I is a hybrid version of figure 1 and as such has a third area IIA of the storage racks R as a hybrid storage area for slow mover transport units ST and fast mover transport units FT, which is serviced by storage and removal apparatus 5 of the single level service type and also by storage and removal apparatus 50 of the multi level service type.

The storage and removal apparatus 5 of the single level service type is used to service the lower levels 3A of the third area IIA in which the fast mover transport units FT are kept and the storage and removal apparatus 50 of the multi level service type is used to service the upper levels 3B of the third area IIA in which the slow mover transport units ST are kept.

For connection to the rest of the warehouse at least one storage-entry feeding line 4 and at least one removal-from storage feeding line 6 are provided on the floor level of the first area I.

The removal-from-storage lift 8A is again used to transfer the transport units T to the removal-from-storage feeding line 6 and the supply-to-storage lift 8B is used to transfer the transport units T from the at least one storage-entry feeding line 4, but is arranged to also cover all levels of the third area IIA.

To allow the storage and removal apparatus 50 to easily exchange slow mover transport units ST with the respective lifts 8A, B the lowest level serviced by the storage and removal apparatus 50 contains rack conveyors 9.

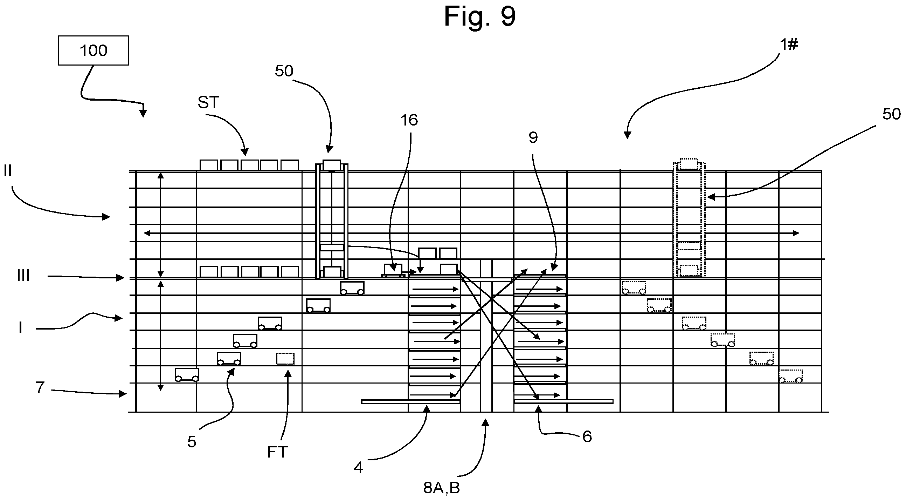

In the embodiment of figure 9 the storage system 1# has a similar arrangement as in figure 1, namely the storage system 1# has a first area I of the storage racks R and a second area II of the storage racks R, wherein the first area I is arranged below the second area II. Between these areas I and II a mezzanine level III is arranged.

However, in contrast to figure 1, the removal-from-storage lifts 8A and the supply-to-storage lifts 8B are arranged within the racks R in the middle along the aisles 2 such that the ASRS 50 and shuttle 5 can pass the lifts 8A, B.

The lifts 8A, B are integrated into the rack R such that they share the joint foot print and the aisle 3 is not blocked.

The storage-entry feeding line 4 and the removal-from storage feeding line 6 are located everywhere along the path of the lift but typically in the lowest rack level 7.

Additional storage and removal apparatus of the multi level service type, ASRS 50 and/or of the single level service type, shuttle 5, may be added to the respective areas II, I (indicated in hashed lines), as the lifts 8A, B are now accessible from two sides of the aisle 2.

This also allows to move transport units T containing order items either directly to an outbound removal-from-storage lift 8A or route them to another storage area for order consolidation, as indicated by the arrows in figure 9.

Transport units T containing product items may be directly stored to the first area of the storage racks I, i. e. fast moving zone, or they may be stored first in second area of the storage racks II, i. e. slow mover zone, as reserve storage and then routed to another storage area when they are needed, "activated". Other way around, transport units containing "active" products may be routed to the second storage area of the racks, i. e. slow moving storage, once they are not needed directly anymore, i. e. become "inactive".

Interfacing rack conveyors 9 are located adjacent the lift 8A, B in the racking footprint such that they source and discharge the neighboring lifts 8A, B to decouple their operation from that of the (single level) shuttle 5.

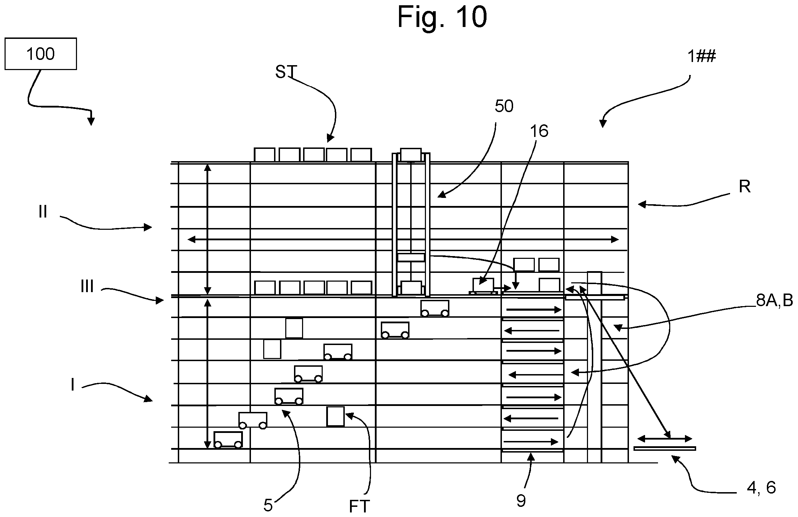

As indicated in figure 10, showing an alternative storage system 1## to figure 1, the transfer direction of these rack conveyors 9 may also be set in an alternative manner and/or controlled to be used in either direction (reversed) so that transport units T containing order items may be either retrieved directly and moved to the outbound removal-from storage feeding line or routed to another storage area for order consolidation (later use), as indicated by the arrows.

The rack conveyors 9 in certain levels 7 may be inbound and those on other levels outbound. Such arrangement may be alternating either in every level or in few levels or at random or each direction can be grouped in block(s).

The at least one storage-entry feeding line 4 and at least one removal-from storage feeding line 6 are arranged at the floor or in elevated level(s).

## Claims

1. Storage system for transport units (T), with
- a plurality of storage racks (R) with multiple storage rack levels (7) with an aisle (2) in between two storage racks (R) for storage of the transport units (T);
- at least one storage-entry feeding line (4);
- at least one removal-from storage feeding line (6);
- at least one removal-from-storage lift (8A) is used to transfer the transport units (T) to the removal-from-storage feeding line (6);
- at least one supply-to-storage lift (8B) is used to transfer the transport units (T) from the at least one storage-entry feeding line (4);
- several first storage and removal apparatus (5) of the single level service type that travel along the aisle (2), in a first area (I) of the storage racks (R), and having a central load carrying area for carrying transport units (T) with adjacent telescopic load handling means, extendable to both sides of the apparatus for storage and retrieval of the transport units (T) into storage and from storage and for discharging to and supplying from the at least one removal-from-storage lift (8A) and the at least one supply-to-storage lift (8B);
- several second storage and removal apparatus (ASRS,) of the multi level service type, that travel along the aisle (2), in a second area (II) of the storage racks (R), and run on at least one rail travel located in the aisle, wherein the ASRS comprises a vertical mast with a bifacial load handling means travelling vertically along the mast for loading and unloading items to sides of the aisle for storage and retrieval of the transport units (T) into storage and from storage, a trolley located at the mast for engaging the at least one travel rail,
- at least one control (100) for the control of the system and its components;
**characterized in that** the control is operable to control the storage and retrieval of transport units (T) by controlling movement of the first storage and removal apparatus (5) of the single level service type and of the removal-from-storage lift (8A) and of the supply-to-storage lift (8B) and of the second storage and removal apparatus of the multi level service type (50) and is operable to
- use the first area (I) of the storage racks (R) for dedicated storage of fast mover transport units (FT), which is serviced by storage and removal apparatus (5) of the single level service type present on each such level and each such level is directly connected to the at least one removal-from-storage lift (8A) and the at least one supply-to-storage lift (8B), both removal-from-storage lift (8A) and supply-to-storage lift (8B) having interfacing rack conveyors (9) arranged within the footprint of the racking;
and is operable to
- use the second area (II) of the storage racks (R) for dedicated storage of slow mover transport units (ST), which is serviced by the second storage and removal apparatus of the multi level service type.

2. Storage system according to claim 1, **characterized in that** the first area (I) of the storage racks (R) and the second area (II) of the storage racks (R) are arranged vertically above each other and/or in adjacent aisles.

3. Storage system according to claim 1, **characterized in that** the first area of the storage racks (R) and the second area of the storage racks (R) are arranged vertically above each other and share the same rack structure.

4. Storage system according to claim 2 or 3, **characterized in that** when the first and second area are arranged vertically above each other, the storage racks (R) having an exchange storage rack level(s) (3A) that has shared access to the removal-from-storage lift (8A) and to the supply-to-storage lift (8B) as well as by the second storage and removal apparatus of the multi level service type.

5. Storage system according to a preceding claim, **characterized in that** both removal-from-storage lift (8A) and supply-to-storage lift (8B) are configured such that transport units can be either routed from the second area (II) of the storage racks to the first area (I) of the storage racks, or vice versa, or the transport units can be directly stored and retrieved directly from each area.

6. Storage system according to a preceding claim, **characterized in that** the removal-from-storage lifts (8A) and the supply-to-storage lifts (8B) are arranged within the racks (R) along the aisles (3) such that the first storage and removal apparatus (5) of the single level service type and/or the second storage and removal apparatus of the multi level service type (50) can pass the lifts (8A, B)..

7. Storage system according to a preceding claim, **characterized in that** the storage racks of the first area not arranged on the outside are each arranged in pairs adjoining one another and having a racking storage aisle (2) on one side and exchange of transport units (T) takes place between the center storage racking aisle (2) and an adjacent wing storage racking aisle (2') via transverse conveyance locations (Q) in the storage racks themselves, wherein the storage and removal apparatus (5) of the single level service type moves the transport units (T) in the transverse conveyance locations (Q).

8. Storage system according to any preceding claim **characterized by** AMR travelling on a floor level or mezzanine level, below the racks, and exchanging transport units with the first and/or second area for order consolidation purpose by receiving or discharging transport units form the lowest rack storage level of the respective area.

9. Storage system according to any preceding claim **characterized in that** the control is operable to use the AMR travelling on a floor level or mezzanine level below the racks of the second area for exchanging slow mover transport units (ST) between aisles.

10. Storage system according to any preceding claim **characterized in that** the at least one storage-entry feeding line (4) and at least one removal-from storage feeding line (6) are arranged on the floor level when the first area is arranged below the second area, or are arranged on a mezzanine level when the first area is arranged above the second area.

11. Storage system according to any preceding claim **characterized in that** the exchange systems are arranged at the end of the racks opposite the least one removal-from-storage lift (8A) and the at least one supply-to-storage lift (8B).

12. Storage system according to any preceding claim **characterized in that** interfacing rack conveyors (9) are located adjacent the lift in the racking footprint such that they source and/or discharge the neighboring lifts (8A, 8B) to decouple their operation from that of the storage and removal apparatus (5).

13. Storage system according to any preceding claim **characterized in that** the control is operable to use the dedicated levels and/or aisles for consolidating fast mover transport units (FT).

14. Storage system according to any preceding claim **characterized in that** the control is operable to use the rack space opposite side of the removal-from-storage lift (8A) and of the supply-to-storage lift (8B) for temporarily buffering and/or consolidating slow mover transport units (ST).

15. Storage system according to any preceding claim **characterized in that** the control is operable to use a third area of the storage racks (R) as a hybrid storage area for slow mover transport units (ST) and fast mover transport units (FT), which is serviced by storage and removal apparatus (5) of the single level service type.

16. Storage system according to any preceding claim **characterized in that** a first storage area and a second storage area are arranged in the same aisle with the first storage area being below the second storage area.

17. Storage system according to any preceding claim **characterized in that** the second storage and removal apparatus of the multi level service type runs on and is guided by at least two travel rails that run longitudinally in parallel to scaffolding of one of the storage racks and facing the aisle at differing levels to service the length and height of both storage racks, in a second area of the storage racks (R), one travel rail located at the top of the rack, and one travel rail located on the upper half of the rack, wherein the ASRS comprises a vertical ladder-type mast with cross beams, a bifacial load handling means travelling vertically along the mast for loading and unloading items to sides of the aisle, a top trolley located in the top area of the mast for engaging the upper travel rail of the at least two travel rails and an intermediate trolley located in the upper half of the mast for engaging the intermediate travel rail of the at least two travel rails, at least one of the trolleys is driven and at least one travel rail contains a bus bar for power supply to the ASRS using the corresponding trolley.

18. Method for control of a storage system for transport units (T), especially according to a previous claim, with the storage system having a plurality of storage racks (R) with multiple storage rack levels (7) with an aisle (2) in between two storage racks (R) for storage of the transport units (T), the transport unit being either fast mover transport units (FT) or slow mover transport units (ST),
wherein fast mover transport units (FT) are stored in a first area of the storage racks (R) for dedicated storage of fast mover transport units (FT), which is serviced by storage and removal apparatus (5) of the single level service type present on each such level and each such level is directly connected to the at least one removal-from-storage lift (8A) and the at least one supply-to-storage lift (8B), both removal-from-storage lift (8A) and supply-to-storage lift (8B) having interfacing rack conveyors (9) arranged within the footprint of the racking;
and slow mover transport units (ST) are stored in a second area of the storage racks (R) for dedicated storage of slow mover transport units (ST), which is serviced by the second storage and removal apparatus of the multi level service type.
